(19) Europäisches Patentamt
European Patent Office
Office européen des brevets

(11) Publication number : 0 581 595 A2

(12) # EUROPEAN PATENT APPLICATION

(21) Application number : 93306008.9

(22) Date of filing : 29.07.93

(51) Int. Cl.$^5$ : **F16L 9/12,** F16L 11/06, B29C 71/04, C08L 23/08

(30) Priority : 29.07.92 JP 202712/92

(43) Date of publication of application : 02.02.94 Bulletin 94/05

(84) Designated Contracting States : DE FR GB IT

(71) Applicant : TOKYO BI-TECH LABORATORIES INC
9-12, 8-chome Akasaka
Minato-ku Tokyo (JP)

(72) Inventor : Aoyagi, Juuro
12-4 5-chome, Miyamae, Suginami-ku
Tokyo (JP)

(74) Representative : Rees, David Christopher et al
Kilburn & Strode 30 John Street
London WC1N 2DD (GB)

(54) **Pipe for water or gas.**

(57) A pipe is provided which has been improved to avoid jeopardizing the safety of the environment and is intended for use with a watery liquid or gas. The pipe for use with watery liquid or gas is formed of a copolymer produced by cross-linking an α-olefin and a vinyl monomer having a carboxylic acid ester group by exposure to radiation. This pipe which produces no harm to the safety of the environment, avoids polluting the fluid passing through the interior thereof or causing corrosion of a metallic article held incontact therewith, and excels in its ability to withstand pressure.

EP 0 581 595 A2

## BACKGROUND OF THE INVENTION

### Field of the Invention:

This invention relates to a novel pipe for watery liquid and gas. More particularly, this invention relates to a pipe fit for use with watery liquid and gas and free from pollution.

### Description of the Prior Art:

At present, pipes of rigid polyvinyl chloride resin are used as water pipes. These rigid pipes incorporate as a stabilizer therein the combination of soaps such as of cadmium, barium, and zinc. The use of such heavy metal stabilizers in rigid pipes is in vogue because the incorporation of a stabilizer is highly effective in preventing the produced pipes from liberating hydrochloric acid and consequently deteriorating due to decomposition while in use. In addition to the stabilizer, the pipes incorporate therein such adjuvants as a slip additive, a filler, and a plasticizer.

The use of the heavy metal stabilizer, however, is never desirable from the standpoint of human safety because the pipes incorporating this stabilizer are liable, while in use, to release the corresponding heavy metal ion into the drinking water. There are times when the pipes suffer release of part of the adjuvants or the residual monomer in the form of an organic substance. The possibility of the released organic substance exhibiting toxicity is not necessarily absent. When the pipes of polyvinyl chloride resin are discarded as waste after expiration of their service life, since the raw material therefor contains a chlorine atom, the occurrence of chlorine gas from the discarded waste poses a problem.

In widely varied fields, resinous materials of a good many kinds are being used for pipes which are intended to handle watery liquids in addition to those for use with service water. Their use is not uncommon even in such fields which are greatly in need of among other considerations, human safety. The pipes laid for the introduction and transfer of edible dopes used in devices for preparation of food, fermentation, and brewing and the pipes distributed for the introduction and transfer of purified water used in devices for the production of water of exceptionally high purity are apt examples. The renowned raw materials which are effectively usable herein for pipes of varying purposes include, for example, polyethylene, polypropylene, polystyrene, acrylonitrile-styrene copolymer, methyl methacrylate-styrene copolymer, acrylonitrilebutadiene-styrene copolymer, and polycarbonate, in addition to the polyvinyl chloride mentioned above. They are, however, deficient in their ability to resist pressure and in mechanical properties. Like polyvinyl chloride, they have components such as a monomer, an oligomer, an organic metal, etc which dissolve and diffuse into the watery liquid. All these components are not perfectly nontoxic. Thus, the desirability of developing for use in pipes destined to handle watery liquids, a raw material which has no toxicity of its own and has no possibility of releasing mischievous organic components into the watery liquid has found widespread recognition.

This invention, therefore, has an object of providing a novel pipe for watery liquid or gas.

This invention has another object of providing from a raw material incapable of releasing a harmful substance, a pipe for use with watery liquid or gas, which pipe is so improved with a view particularly to the safety of the environment that, when it is disposed of as waste after its service life has expired, it does not emit harmful gases such as chlorine.

This invention has a further object of providing for use with watery liquid or gas a pipe which is not only inexpensive from the economic point of view but also excellent in such properties as its ability to resist chemicals, elasticity, its ability to withstand pressure, and its ability to endure low temperatures.

## SUMMARY OF THE INVENTION

The objects described above are accomplished by a pipe for use with watery liquid or gas which comprises a copolymer produced by cross-linking an α-olefin and a vinyl monomer containing a carboxylic acid ester group by exposure to radiation.

This invention also discloses a pipe for use with watery liquid or gas, wherein the α-olefin in the copolymer is an α-olefin having 2 to 5 carbon atoms.

This invention further discloses a pipe for use with watery liquid or gas, wherein the vinyl monomer containing the carboxylic acid ester group and constituting a moiety of the copolymer is vinyl acetate or an alkyl acrylate containing an alkyl group of 1 to 5 carbon atoms.

This invention further discloses a pipe for use with watery liquid or gas, wherein the copolymer incorporates therein 0.01 to 3.0 mol% of a pollution-free stabilizer.

The pipe of this invention for use with watery liquid or gas neither jeopardizes the safety of the environment

by particularly polluting the fluid passed through the interior thereof nor corrodes a magnetic article held in contact therewith, acquires an enhanced ability to withstand pressure, excels in various physical properties such as the ability to resist chemicals, elasticity, and the ability to withstand low temperatures, is inexpensive and, therefore, is suitable for various applications.

## BRIEF DESCRIPTION OF THE DRAWINGS

Fig. 1 is a cross section illustrating the state in which a pipe as one embodiment of this invention is used with watery liquid or gas.

Fig. 2 is a cross section illustrating the state in which a pipe as another embodiment of this invention is used with watery liquid or gas.

Fig. 3 is a diagram illustrating schematically the state in which pipes are laid out for the purpose of an airtight test.

## DESCRIPTION OF THE PREFERRED EMBODIMENT

Now, this invention will be described in detail below with reference to embodiments thereof.

The pipe of this invention for use with watery liquid or gas comprises a copolymer produced by crosslinking an α-olefin and a vinyl monomer containing a carboxylic acid ester group by exposure to radiation. This pipe for use with watery liquid or gas may be formed solely of the copolymer mentioned above or of a laminate of the copolymer with another resinous member or a metallic member. It may be formed with a wall of multiple layers. In this construction, the layer of the copolymer is preferably on the innermost side of the tubular wall.

The pipe of this invention for use with watery liquid or gas which is formed of a copolymer produced by cross-linking an α-olefin and a vinyl monomer containing a carboxylic acid ester group by exposure to radiation is obtained by subjecting a copolymer of an α-olefin and a vinyl monomer containing a carboxylic acid ester group to primary processing by extrusion molding or injection molding thereby forming the copolymer into a tubular shape, then irradiating the tube of the copolymer with radiation thereby cross-linking the interior texture of the copolymer and, when necessary, subjecting the tube of cross-linked copolymer to secondary processing by shaving, cutting, etc. The terminal parts of this pipe for use with watery liquid or gas structurally may be formed each in the shape of a flange to facilitate joining one such pipe to another.

The copolymers of an α-olefin and a vinyl monomer containing a carboxylic acid ester group which are effectively usable for the production of the pipe of this invention for use with watery liquid or gas are numerous. As representatives of these copolymers, α-olefin-vinyl acetate copolymers having the following repeating unit:

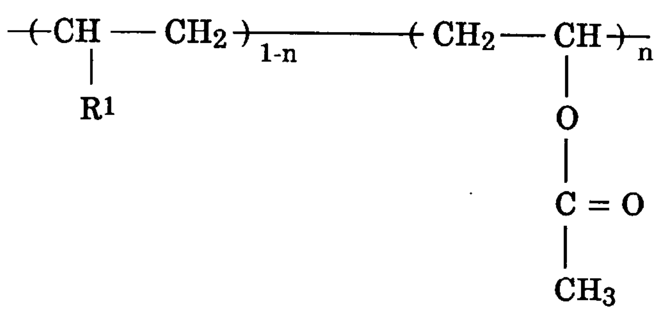

wherein $R^1$ is a hydrogen atom or an alkyl group and n is a numeral satisfying the expression, $0 < n < 1$, and α-olefin-alkyl acrylate copolymers having the following repeating unit:

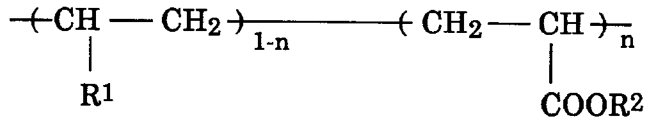

wherein $R^1$ is a hydrogen atom or an alkyl group, $R^2$ is an alkyl group, and n is a numeral satisfying the expression, $0 < n < 1$, may be cited.

In the copolymer of an α-olefin and a vinyl monomer having a carboxylic acid ester group, the α-olefin is preferably an α-olefin whose number of carbon atoms is in the range of 2 to 5, namely the substituent $R^1$ in

the aforementioned repeating unit is preferably a hydrogen atom or an alkyl group of 1 to 3 carbon atoms. When the copolymer of an α-olefin and a vinyl monomer having a carboxylic acid ester group is an α-olefin-alkyl acrylate copolymer mentioned above, the substituent $R^2$ in the aforementioned repeating unit is preferably an alkyl group whose number of carbon atoms is in the range of 1 to 5, more preferably 2 to 4. The reason for these specific ranges is that when the component monomers of the copolymer satisfy these conditions, the produced pipe for use with watery liquid or gas has further enhancement of such properties as its ability to oppose chemicals, elasticity, and softness.

In the copolymer of an α-olefin and a vinyl monomer having a carboxylic acid ester group, the content of the α-olefin is preferably in the range of 98 to 60 mol%, more preferably 97 to 65 mol% and the content of the vinyl monomer having a carboxylic acid ester group is preferably in the range of 2 to 40 mol%, more preferably 3 to 35 mol%. In the case of the α-olefin-vinyl acetate copolymer and the α-olefin-alkyl acrylate copolymer mentioned above, the variable n in the repeating unit thereof assumes a numerical value in the range of 0.02 to 0.40, preferably 0.03 to 0.35. The reason for these specific contents is that the copolymer assumes unduly high crystallinity and suffers from degradation in elasticity and softness when the α-olefin content exceeds 98 mol%, whereas the copolymer suffers from degradation in tensile strength and its ability to recover from compression when the α-olefin content is less than 60 mol%. In the case of the α-olefin-vinyl acetate copolymer, the cross-linked copolymer becomes colorless and opaque when the vinyl acetate content is in the range of 10 to 18 mol% and becomes transparent when the content exceeds 18 mol%. The number average molecular weight of the copolymer is in the range of 5,000 to 30,000, preferably 10,000 to 20,000.

The copolymer of an α-olefin and a vinyl monomer having a carboxylic acid ester group, when necessary, may incorporate therein a stabilizer. This stabilizer is preferably incapable of causing pollution. The stabilizers which answer this description include, for example, pentaerythrityl tetrakis-[3-(3,5-ditertiary-butyl-4-hydroxyphenyl)propionate], 2,2'-thiodiethyl-bis-[3-(3,5-ditertiary-butyl-4-hydroxyphenyl)propionate], octadecyl-3-(3,5-ditertiary-butyl-4-hydroxyphenyl)propionate, dilaurylthiodipropionate, and distearyl-thiopropionate. When the copolymer to be used in this invention is irradiated with radiation, this irradiation induces a competing reactions between a cross-linking reaction and a decomposition reaction. By having a vinyl acetate block introduced into the chain, the irradiation is able to induce the crosslinking reaction predominantly. Owing to the use of the stabilizer mentioned above, the decomposition reaction is further curbed and the produced copolymer is allowed to acquire an improved quality completely incapable of releasing such toxic substances as residual monomers, oligomers and adjuvants. The stabilizers mentioned above contain no heavy metals, exhibit no ability to cause pollution, fulfill also the function of an antioxidant, and invariably avoid producing either taste or odor.

The amount of the aforementioned pollution-free stabilizer to be used is such that the content thereof in the copolymer of this invention falls generally in the range of 0.01 to 3.0% by weight, preferably 0.025 to 1.0% by weight.

The copolymer of an α-olefin and a vinyl monomer having a carboxylic acid ester group, when necessary, may incorporate therein such adjuvants as a coloring agent, a filler, and a antistatic agent. These adjuvants are preferably incapable of causing pollution.

The copolymer of an α-olefin and a vinyl monomer having a carboxylic acid ester group is cross-linked by exposure to radiation. Since the copolymer of which the pipe of this invention for use with watery liquid or gas is formed has been cross-linked without the use of a crosslinking agent, the pipe has no possibility of corroding such a metal as stainless steel used in a pipe joint, such corrosion normally occurring in the presence of a residual cross-linking agent in the copolymer or polluting the fluid passing through the interior of the pipe and enjoys thermal stability.

The radiation to be used for the cross-linking reaction in the present invention may be a gamma ray or an electron ray, preferably a gamma ray. When the cross-linking reaction is effected by the use of a gamma ray, for example, the dose of irradiation is preferably in the approximate range of 1 to 25 Mrads, more preferably 3 to 15 Mrads.

Though no particular restriction is imposed on the degree of cross-linking of the copolymer of an α-olefin and a vinyl monomer having a carboxylic acid ester group which has been cross-linked by exposure to radiation, the degree of cross-linking of the copolymer is preferably in the range of 30 to 95%, more preferably 60 to 90%, ideally so that the produced copolymer, ideally may have sufficient elasticity and softness and exhibit an ability to recover from compression and thermal stability. When the degree of cross-linking is 70% or more, the copolymer has a high heat-resisting temperature. Specifically, an ethylene-vinyl acetate copolymer having this degree of cross-linking has the ability to withstand heat of up to 70°C. When the degree of cross-linking is in the range of 30 to 70%, the copolymer has the ideal capabilities to withstand low temperatures in spite of a slightly lower heat-resisting ability. Specifically, an ethylene-vinyl acetate copolymer having this degree of cross-linking is vested with an ability to withstand low temperatures as low as -196°C.

The pipe of this invention for use with watery liquid or gas is formed of the copolymer which is produced by cross-linking an $\alpha$-olefin and a vinyl monomer having a carboxylic acid ester group by exposure to radiation. This pipe, by way of its outstanding characteristic properties, finds utility in various applications in the field reguiring the human safety such as water pipes, pipes laid for the introduction and transfer of food dopes in devices for food processing, fermentation, and brewing, requiring hygienic conditions, pipes for conveyance of medicinal substances as medical materials, and pipes for the introduction and transfer of purified water in devices which produce extremely pure water by removal of impurities such as trace ions and organic substances. The pipe has an exceptionally high degree of airtightness under conditions such that the working temperature is in the range of from -90° to +70°C and the maximum working inner pressure is not more than 40 kg/cm$^2$.

Fig. 1 is a diagram illustrating water pipes as one embodiment of this invention which contemplates the pipe for use with watery liquid or gas. In this embodiment, a gasket 3 is nipped between flange parts 3a and 2b respectively of water pipes 1a and lb each formed wholly of the copolymer described above in a length of 3 to 4 meters and is clamped with a bolt and a nut 4 at a pressure of about 0.2 kg/mm$^2$. Through the common interior of the water pipes 1a and 1b, the service water is conveyed under a pressure of about 10 atmospheres at temperatures between 10° to 27°C. The water pipe 1 constructed of the copolymer as described above, is capable of retaining stable watertightness for a long period of time without polluting the service water flowing through the interior or corroding and inflicting pinholes on the bolt and nut used in the flange parts 2a and 2b of the water pipes 1a and 1b.

Fig. 2 is a diagram illustrating the state in which the pipe of this invention for use with watery liquid or gas is put to use in a food processing pressure vessel as another embodiment of the invention. In this embodiment, a food material feed pipe 5 formed wholly of the copolymer mentioned above is provided on the peripheral surface of the leading terminal thereof with 0 rings 6a and 6b, with the leading terminal of the pipe 5 inserted through an upper open part 8 of a pressure vessel 7. When the pressure vessel 7 is in use, the interior of this pressure vessel 7 and the food material feed pipe 5 are kept under conditions such that the temperature is in the range of from -40° to +70°C and the pressure is about 20 atmospheres. In spite of the severe conditions, the food material feed pipe 5 which is formed of the aforementioned copolymer is capable of stably retaining watertightness for a long period of time without inducing the release of harmful substances into the food material passing through the pipe.

Now, this invention will be described more specifically below with reference to the working examples.

Example 1

A tube 2 mm thick and with a 10 mm outside diameter was formed by extrusion molding an ethylene-vinyl acetate copolymer (vinyl acetate content 8% by weight and viscosity [$\eta$] 0.85 as measured in benzene at 30°C) containing 0.3% by weight of pertuerythrityl tetrakis-[3-(3,5-ditertiary butyl-4-hydroxyphenyl) propionate. Then, this tube was irradiated with gamma rays to a dose of 10 Mrads to cross-link the ethylene-vinyl acetate copolymer. Pipes for use with watery liquid or gas were prepared by cutting the tube to desired lengths. Separately, cross-linked sheets 2 mm thick were produced in the same manner as described above with the copolymer.

The pipes obtained as described above for use with watery liquid or water were subjected to the following various tests (except that sheets were used when the tests did not require use of a tubular sample).

1. Test for quality

The test for quality (sheet sample) was carried out with respect to the following items.

1) Specific gravity

The method specified in JIS (Japanese Industrial Standard) K7112 was adopted.

2) Hardness

The method specified in JIS K6301 was adopted.

3) Tensile test

The method specified in JIS K7003 was adopted.

4) Specific heat

Testing instrument: Produced by Nessler Corp. and marketed under product code of "TA-3000, DSC-30"

Rate of Temperature increase: 10°C/min.

Atmosphere: In a stream of $N_2$ flowing at a rate of 40 ml/min.

5) Test for thermal conductivity

Shibayama's acetone-benzene method (heat-conduction temperature: 68.4°C)

6) Test for thermal expansion

Measuring instrument: Produced by Metler Corp. and marketed under product code of "TA-3000, TMA-40"
Rate of Temperature increase: 10°C/min.
Load: 0.02N
Atmosphere: In a stream of $N_2$ flowing at a rate of 40 ml/min
7) Test for Vicat softening temperature
The method specified in JIS K7206 was adopted.
8) Test for volume resistivity
The method specified in JIS K6911 was adopted.
9) Dielectric constant and dielectric loss tangent
The method specified in JIS K6911 was adopted.
10) Test for dielectric breakdown
The method specified in JIS K6911 was adopted.
11) Test for ability to resist arc
The method specified in JIS K6911 was adopted.
12) Test for absorption ratio
The method specified in JIS K6911 was adopted. The test was carried out at a temperature of 23 ± 1°C for 24 hours.
13) Test for ability to resist acids
In accordance with the method specified in JIS K7114, samples were severally immersed for 7 days at room temperature in sulfuric acid (10 w/w% and 30 w/w%) and hydrochloric acid (10 w/w% and 35 w/t%) and, at the end of the immersion, examined to determine the proportional change in mass and the outward appearance.
14) Test for ability to resist alkali
In accordance with the method specified in JIS K7114, samples were severally immersed for 7 days at room temperature in sodium hydroxide (10 w/w% and 30 w/w%) and, at the end of the immersion, examined to determine the proportional change in mass and the outward appearance.
15) Test for ability to resist organic solvents
In accordance with the method specified in JIS K7114, samples were severally immersed for 7 days at room temperature in ethyl alcohol and carbon tetrachloride and, at the end of the immersion, examined to determine the proportional change in mass and the outward appearance.
16) Test for ability to withstand weather conditions
The method specified in JIS D0205 was adopted.
Measuring instrument: Sunshine weathermeter
Black panel temperature: 63 ± 3°C
Cycle of rainfall: 18 minutes/120 minutes
Average discharge voltage: 50 V
Average discharge current: 60 A
Testing time: 120 hours
The results of the test for quality are shown in Table 1.

Table 1

| | | | | | | |
|---|---|---|---|---|---|---|
| Specific gravity | | 0.94 | | | | |
| Hardness Hs (JIS A) | | 91 | | | | |
| Tensile test | : Tensile strength | 154 ($kgf/cm^2$) | | | | |
| | : Elengation(%) | 470 | | | | |
| Specific heat | : Temp. of material (°C) | 20 | 30 | 40 | 50 | 60 |
| | : Specific heat (J/g· °C) | 2.18 | 2.28 | 2.62 | 3.20 | 3.24 |
| | : Temp. of material (°C) | 70 | 80 | 90 | 100 | 110 |
| | : Specific heat (J/g· °C) | 3.29 | 4.66 | 2.39 | 2.22 | 2.25 |
| Test of thermal conduetivity | | | | | | |
| | : Temp. of material (°C) | 40-50 | 40-60 | 40-70 | | |
| | : Thermal expansion rate($10^{-8}$/°C) | 287.4 | 324.1 | 398.9 | | |
| | : Temp. of material (°C) | 40-80 | 40-90 | 40-100 | | |
| | : Thermal expansion rate($10^{-8}$/°C) | 486.8 | 643.2 | 610.9 | | |
| Test for Viscat Softening temperature (°C) | | | | 62.5 | | |
| Test for volume resistivity (Ω·cm) | | | | $3.1 \times 10^{15}$ | | |

Table 1 (continued)

| | | | | | | | |
|---|---|---|---|---|---|---|---|
| Dielectric constant and dielectric loss tangent | | | | | | | |
| : Frequency (Hz) | $5 \times 10$ | $1.1 \times 10^2$ | $3.3 \times 10^2$ | $1 \times 10^3$ | $3 \times 10^3$ | | |
| : Dielectric constant | 3.15 | 3.14 | 3.13 | 3.13 | 3.11 | | |
| : Dielectric loss tangent ($\times 10^{-4}$) | 55 | 27 | 37 | 48 | 63 | | |
| : Frequency (Hz) | $1 \times 10^4$ | $3 \times 10^4$ | $1 \times 10^5$ | $3 \times 10^5$ | $1 \times 10^6$ | | |
| : Dielectric constant | 3.10 | 3.07 | 3.04 | | | | |
| : Dielectric loss tangent ($\times 10^{-4}$) | 93 | 138 | 210 | 285 | 420 | | |
| Test for dielectric breakdown | 32.4 (kV/mm) | | | | | | |
| Arc resistance time (sec) | 323 (Arc extinguished after sample molten and ignition) | | | | | | |
| Absorption ratio (%) | 0 | | | | | | |
| Test for ability to resist acid | | | | | | | |
| : immersed time (hr) | 24 | 48 | 72 | 96 | 120 | 144 | 168 |
| : change ratio of mass (%) | | | | | | | |
| $10\%H_2SO_4$ | 0 | | | | 0 | 0 | 0 |
| $30\%H_2SO_4$ | 0 | | | | 0 | 0 | 0 |
| 10%HCl | +0.1 | +0.1 | +0.1 | +0.1 | | | +0.1 |
| 35%HCl | +0.8 | +0.8 | +0.9 | +0.9 | | | +0.9 |

Table 1 (continued)

| | | | | | | | |
|---|---|---|---|---|---|---|---|
| : Appearance | $10\%H_2SO_4$ | no abnormal | | | | | |
| | $30\%H_2SO_4$ | no abnormal | | | | | |
| | 10%HCl | no abnormal | | | | | |
| | 35%HCl | no abnormal | | | | | |
| Alkali resistance test | | | | | | | |
| :Immersion time (hr) | | 24 | 120 | 144 | 168 | | |
| :Mass change ratio (%) | | | | | | | |
| 10%NaOH | | +0.1 | +0.1 | +0.1 | +0.1 | | |
| 30%NaOH | | 0 | 0 | +0.1 | +0.1 | | |
| : Appearance | 10%NaOH | no abnormal | | | | | |
| | 30%NaOH | no abnormal | | | | | |
| Test fpr prtanic resistance | | | | | | | |
| :Immersion time (hr) | | 24 | 72 | 96 | 120 | 144 | 168 |
| :Mass change ratio (%) | | | | | | | |
| Ethyl alcohol | | +2.2 | +3.4 | +3.8 | +4.0 | +4.1 | +4.2 |
| Carbon tetrachloride | | +313.1 | +391.0 | +404.0 | - | - | - |
| : Appearance | | | | | | | |
| Ethyl alcohol | | no abnormal | | | | | |
| Carbon tetrachloride | | remakably softened | | | | | |
| Weatherability test | | | | | | | |
| : Appearance | | coloring, crack and slit cannot be recognized | | | | | |
| : Hardness Hs (JIS A) | | 86 | | | | | |
| : Tensile strength | | 123 ($kgf/cm^2$) | | | | | |
| : Flongation (%) | | 490 | | | | | |

2. Test for the release of components (sheet sample)

In accordance with the method specified in the Japanese Pharmacopoeia for testing a plastic container used for pharmacopoeial transfusion for the release of components of the resin of the container into the transfusion, the test was conducted with respect to the items indicated hereinbelow.

The portion of a sample having a uniform thickness was cut into pieces. From the cut pieces of sample, those whose obverse and reverse surface areas totalled 1,200 $m^2$ were gathered. These cut pieces were further shredded into strips roughly measuring 5 cm in length and 0.5 cm in width. The strips were washed with water and dried at room temperature. The cleaned strips were placed in a glass container having an inner volume of about 300 ml and in accordance with a method for testing a glass injection vial with respect to the release of alkali into the injection held in the glass vial. The strips held in the glass container and 200 ml of water added thereto were together sealed in the glass container by fusing the opening of the glass container. The glass container was heated in a high-pressure vapor sterilizer at 121°C for one hour and then left cooling to room temperature. The liquid consequently obtained was taken as a test liquid. Separately, a blank test liquid was prepared by repeating the procedure described above with water. The test liquid and the blank test liquid were tested for the following items.

1) Physical condition

50 ml of the test liquid was placed in a Nessler tube and visually examined against a black and a white background.

2) Effervescence

5 ml of the test liquid was placed in a stoppered test tube approximately measuring 15 mm in inside diameter and 200 mm in length and shaken vigorously for three minutes. The time required for the foam consequently produced in the test liquid to disappear substantially was clocked with a stop watch.

3) pH

The test liquid and the blank test liquid, each taken in a fixed volume of 20 ml, were severally mixed with 1.0 ml of a liquid prepared by diluting 10 g of potassium chloride with water to a total volume of 1,000 ml and tested for pH. The difference between the two numerical values of pH found by the test was reported. The pH meter used for the test was a product of Hitachi Horiba K.K. and marketed under product code of "F-7."

4) Chloride

10 ml of the test liquid was placed in a Nessler tube and tested for chloride content. The liquid for comparison contained 0.2 ml of an aqueous 0.001N hydrochloric acid solution.

5) Sulfate

20 ml of the test liquid was placed in a Nessler tube and processed to determine the sulfate content. The liquid for comparison contained 0.2 ml of an aqueous 0.001N hydrochloric acid solution.

6) Phosphate

50 ml of the test liquid was placed in a Nessler tube. The test liquid and 2.5 ml of ammonium molybdenum-sulfuric acid reagent and 1.0 ml of 1-amino-2-naphthol-4-sulfonic acid reagent added thereto were stirred together thoroughly. The resultant mixture was compared in color with the following comparative liquid.

As the comparative liquid, a liquid obtained by diluting 0.30 ml of the standard solution of phosphoric acid with water to a total volume of 50 ml was treated in the same manner as described above.

7) Ammonium

10 ml of the test liquid was placed in a Nessler tube and diluted with water to a total volume of 50 ml. The diluted test liquid and 2.0 ml of an aqueous sodium hydroxide solution (1 $\rightarrow$ 3) and 1.0 ml of Nessler reagent added thereto were thoroughly stirred together. The resultant mixture was compared in color with the following comparative liquid.

As the comparative liquid, 10 ml of the blank test liquid was placed in a Nessler tube and processed in the same manner as above.

8) Lead

The test liquid was used as a sample solution. Separately, a mixture obtained by diluting 0.5 ml of the standard solution of lead with the blank test liquid accurately to a total volume of 50 ml was used as a reference solution. The sample solution and the reference solution were severally tested by the method of atomic absorption spectrophotometry to determine the absorbance of the sample solution and the absorbance of the reference solution.

Measuring instrument: Hitachi Atomic Absorption Photometer Model 170-10
Gas used: Inflammable gas and acetylene
Combustion supporting gas: Air
Lamp: Lead hollow cathode lamp
Wavelength: 283.3 nm

9) Cadmium

A sample solution was prepared by adding to 10 ml of the test liquid 10 ml of an ammonium citrate solution (1 $\rightarrow$ 4) and two drops of bromothymol blue reagent, diluting the resultant mixture with ammonia reagent until the color of the liquid turned from yellow to green, combining the resultant liquid with 10 ml of ammonium sulfate solution (2 $\rightarrow$ 5) and diluting the produced mixture with water to a total volume of

100 ml, then intimately mixing the diluted mixture with 20 ml of sodium diethyldithio-carbamate solution (1 → 20), allowing the resultant mixture to stand at rest for several minutes, vigorously shaking the mixture with 200 ml of methyl isobutyl ketone, allowing the produced blend to stand to induce separation of a methyl isobutyl ketone layer, and extracting the separated layer. Separately, a reference solution was prepared by combining 0.5 ml of the standard cadmium solution with 10 ml of the blank test liquid, 10 ml of an aqueous ammonium citrate solution (1 → 4), and two drops of bromothymol blue reagent and processing the resultant mixture by following the procedure adopted for the preparation of the sample solution as described above. The sample solution and the reference solution were severally tested by the method of atomic absorption spectro photometry under the following conditions to determine the absorbance of the sample solution and the absorbance of the reference solution.

Testing instrument: Hitachi Atomic Absorption Photometer Model 170-10
Gas used: Inflammable gas and acetylene
Combustion supporting gas: Air
Lamp: Cadmium hollow cathode lamp
Wavelength: 228.8 nm

10) Zinc

A sample solution was prepared by diluting 10 ml of the test liquid with dilute nitric acid (1 → 3) to a total volume of 20 ml. Separately, reference solutions were prepared by diluting 1.0 ml of the standard solution of zinc for determination by atomic absorption spectrometry with water accurately to a total volume of 10 ml, and diluting 1.0 ml, 0.5 ml, and 0.1 ml of the diluted solution severally with dilute nitric acid solution (1 → 3) to a fixed total volume of 20 ml. The sample solution and the reference solutions were tested by the method of atomic absorption spectrophotometry under the following conditions to determine the absorbance of the sample solution and the absorbances of the reference solutions.

Measuring instrument: Hitachi Atomic Absorption Spectrophotometer Model 170-10
Gas used: Inflammable gas and acetylene
Combustion supporting gas: Air
Lamp: Zinc hollow cathode lamp
Wavelength: 213.9 nm

11) Potassium permanganate-reducing substance

In a stoppered Erlenmeyer flask, 20 ml of the test liquid and 20 ml of an aqueous 0.01N potassium permanganate solution and 1.0 ml of dilute sulfuric acid added thereto were boiled together for three minutes. The resultant hot mixture was cooled. The cooled mixture and 0.10 g of potassium iodide added thereto were airtightly sealed together in the flask, shaken therein, left standing therein for 10 minutes, and thereafter titrated with an aqueous 0.01N sodium thiosulfate solution (with five drops of starch reagent used as an indicator). Separately, this procedure was repeated with 20 ml of the blank test liquid. The difference in consumption of the potassium permanganate solution found as described above was reported.

12) Residue of evaporation

On a water bath, 20 ml of the test liquid was evaporated to dryness. The evaporation residue was dried at 105°C for one hour. The dried residue was weighed.

13) Ultraviolet absorption spectrum

The test liquid was subjected to determination of absorbance at a layer length of 10 mm in a wavelength zone of 220 to 350 nm, with the blank test liquid used for control. The measuring instrument used for the determination was a double beam spectrophotometer produced by Shimadzu Seisakusho Ltd. and marketed under product code of "UV-300."

The results of the test for release of component are shown in Table 2 and Table 3.

Table 2 test for release of component

| Item of test | Sheet lost | Sample No. | Result of test |
|---|---|---|---|
| 1) Physical condition | A | 1 | Colorless and transparent |
| | | 2 | Colorless and transparent |
| | | 3 | Colorless and transparent |
| | B | 1 | Colorless and transparent |
| | | 2 | Colorless and transparent |
| | | 3 | Colorless and transparent |
| | C | 1 | Colorless and transparent |
| | | 2 | Colorless and transparent |
| | | 3 | Colorless and transparent |
| 2) Effervescene | A | 1 | 49 sec |
| | | 2 | 54 sec |
| | | 3 | 43 sec |
| | B | 1 | 66 sec |
| | | 2 | 50 sec |
| | | 3 | 51 sec |
| | C | 1 | 39 sec |
| | | 2 | 42 sec |
| | | 3 | 47 sec |

| 3) pH | | | test liq. | blank liq. | difference |
|---|---|---|---|---|---|
| | A | 1 | 5.55 | 5.85 | 0.30 |
| | | 2 | 5.52 | | 0.33 |
| | | 3 | 5.50 | | 0.35 |
| | B | 1 | 5.63 | 5.88 | 0.25 |
| | | 2 | 5.57 | | 0.31 |
| | | 3 | 5.58 | | 0.30 |
| | C | 1 | 5.61 | 5.91 | 0.30 |
| | | 2 | 5.66 | | 0.25 |
| | | 3 | 5.62 | | 0.29 |

Table 2 (continued)

| Item of test | Sheet lost | Sample No. | Result of test |
|---|---|---|---|
| 4) Chloride | A | 1 | less than comparison liquid |
| | | 2 | less than comparison liquid |
| | | 3 | less than comparison liquid |
| | B | 1 | less than comparison liquid |
| | | 2 | less than comparison liquid |
| | | 3 | less than comparison liquid |
| | C | 1 | less than comparison liquid |
| | | 2 | less than comparison liquid |
| | | 3 | less than comparison liquid |
| 5) Sulfate | A | 1 | less than comparison liquid |
| | | 2 | less than comparison liquid |
| | | 3 | less than comparison liquid |
| | B | 1 | less than comparison liquid |
| | | 2 | less than comparison liquid |
| | | 3 | less than comparison liquid |
| | C | 1 | less than comparison liquid |
| | | 2 | less than comparison liquid |
| | | 3 | less than comparison liquid |
| 6) Phosphate | A | 1 | less than comparison liquid |
| | | 2 | less than comparison liquid |
| | | 3 | less than comparison liquid |
| | B | 1 | less than comparison liquid |
| | | 2 | less than comparison liquid |
| | | 3 | less than comparison liquid |
| | C | 1 | less than comparison liquid |
| | | 2 | less than comparison liquid |
| | | 3 | less than comparison liquid |
| 7) Ammonium | A | 1 | less than comparison liquid |
| | | 2 | less than comparison liquid |
| | | 3 | less than comparison liquid |
| | B | 1 | less than comparison liquid |
| | | 2 | less than comparison liquid |
| | | 3 | less than comparison liquid |
| | C | 1 | less than comparison liquid |
| | | 2 | less than comparison liquid |
| | | 3 | less than comparison liquid |

Table 3 Test for release of components

| Item of test | Sheet lost | Sample No. | Result of test |
|---|---|---|---|
| 8) Lead | A | 1 | N.D. |
| | | 2 | N.D. |
| | | 3 | N.D. |
| | B | 1 | N.D. |
| | | 2 | N.D. |
| | | 3 | N.D. |
| | C | 1 | N.D. |
| | | 2 | N.D. |
| | | 3 | N.D. |
| 9) Cadmium | A | 1 | N.D. |
| | | 2 | N.D. |
| | | 3 | N.D. |
| | B | 1 | N.D. |
| | | 2 | N.D. |
| | | 3 | N.D. |
| | C | 1 | N.D. |
| | | 2 | N.D. |
| | | 3 | N.D. |
| 10) Zinc | A | 1 | Similar to blank |
| | | 2 | Similar to blank |
| | | 3 | Similar to blank |
| | B | 1 | N.D. |
| | | 2 | N.D. |
| | | 3 | N.D. |
| | C | 1 | Similar to blank |
| | | 2 | Similar to blank |
| | | 3 | Similar to blank |
| 12) Residue of evaporation | A | 1 | 0.2mg |
| | | 2 | 0.0mg |
| | | 3 | 0.0mg |
| | B | 1 | -0.1mg |
| | | 2 | 0.0mg |
| | | 3 | 0.4mg |
| | C | 1 | -0.2mg |
| | | 2 | 0.1mg |
| | | 3 | 0.0mg |

※N.D. =not detected

Table 3 (continued)

| Item of test | Sheet lost | Sample No. | Result of test | | |
|---|---|---|---|---|---|
| 11)Potassium permanganate-reducing substance | | | Sample liq. | Blank liq. | Difference |
| | A | 1 | 17.17 | 17.45 | 0.28 |
| | | 2 | 17.23 | | 0.22 |
| | | 3 | 17.28 | | 0.17 |
| | B | 1 | 17.24 | 17.52 | 0.28 |
| | | 2 | 17.27 | | 0.25 |
| | | 3 | 17.30 | | 0.22 |
| | C | 1 | 17.31 | 17.46 | 0.15 |
| | | 2 | 17.24 | | 0.22 |
| | | 3 | 17.15 | | 0.31 |
| 13)U.V. absorption spectrum | A | 1 | 220-241nm | 0.024 241-350nm | 0.013 |
| | | 2 | | 0.023 | 0.012 |
| | | 3 | | 0.023 | 0.012 |
| | B | 1 | 220-241nm | 0.027 241-350nm | 0.013 |
| | | 2 | | 0.032 | 0.018 |
| | | 3 | | 0.026 | 0.014 |
| | C | 1 | 220-241nm | 0.035 241-350nm | 0.020 |
| | | 2 | | 0.026 | 0.014 |
| | | 3 | | 0.019 | 0.010 |

3. Test for cellular toxicity

In a high pressure vapor sterilizer, a sample of an amount such that the total area of obverse and reverse surfaces thereof was 60 cm2 and 20 ml of injection quality distilled water added thereto were heated together at 121°C for one hour to obtain an extract. The following test was conducted on the extract within 24 hours of completion of this extraction.

In a fermentation vial having an inner volume of 1 liter and containing Eagle culture medium, murine fibroblast cells (L-929) were grown to the extent of forming a single layer. The grown cells were then treated with trypsin and suspended in Eagle culture medium at a concentration of 106 cells per ml of the medium to prepare a cell suspension.

Then, an extract treating culture medium was prepared by mixing the extract and Eagle culture medium of a concentration twice as high in equal volumes. Separately, a control culture medium was prepared by mixing the injection quality distilled water and Eagle culture medium of a concentration twice as high in equal volumes.

The cell suspension was injected in a unit volume of 0.2 ml (2 × 105 cells) into 15 test tubes. The extract treating culture medium was added in a unit volume of 2 ml to 5 (treating group) of the 15 test tubes and the control culture medium in a unit volume of 2 ml to the remaining 10 test tubes (control group at the start of reaction and control group for 72 hours of reaction).

Five of the ten test tubes containing the control culture medium were immediately subjected to centrifugal separation to remove the culture medium. The cells consequently separated were resuspended in a phosphate buffer physiological saline solution having a pH value of 7.0. The suspensions were further centrifuged twice.

The cells were washed out and put to storage at 4°C so as to be used as the control group at the start of reaction.

The 10 test tubes of the treating group and the 72-hour control group were immediately placed in a 5% carbon dioxide fermentation device to induce culture of the cells therein at 37°C for 72 hours. After the culture, the contents of the test tubes were gently washed three times with about 2 ml of a phosphate buffer physiological saline solution of pH 7.0 to obtain the treating group and the 72-hour control group.

The contents of the test tubes of each of the groups were tested for total protein content by the method of colorimetry (Lowry method). The test tubes were severally tested for absorbance (O.D.) at 650 nm. The average O.D. of five test tubes of each group was calculated to find the ratio of inhibition of cell growth in accordance with the following formula.

Ratio of inhibition of cell growth (%) = [(O.D. of 72-hour treating test tubes) - (O.D. of control test tubes at start of reaction)] / [(O.D. of 72-hour control test tubes) - (O.D. of control test tubes at start of reaction)] × 100

The results of the test for cellular toxicity obtained consequently are shown in Table 4.

Table 4 Cellular toxicity test

| O.D.of comparative test tube at starting reaction | O.D. of comparative test tube after 72 hrs. | O.D. of test tube after 72 hrs. |
|---|---|---|
| 0.25 | 0.62 | 0.59 |
| | 0.62 | 0.60 |
| | 0.61 | 0.59 |
| | 0.60 | 0.57 |
| | 0.62 | 0.62 |
| | 0.61 | 0.59 |
| Average value | 0.61 | 0.59 |

Ratio of inhibition of cell growth (%) = 6

4. Test for airtightness

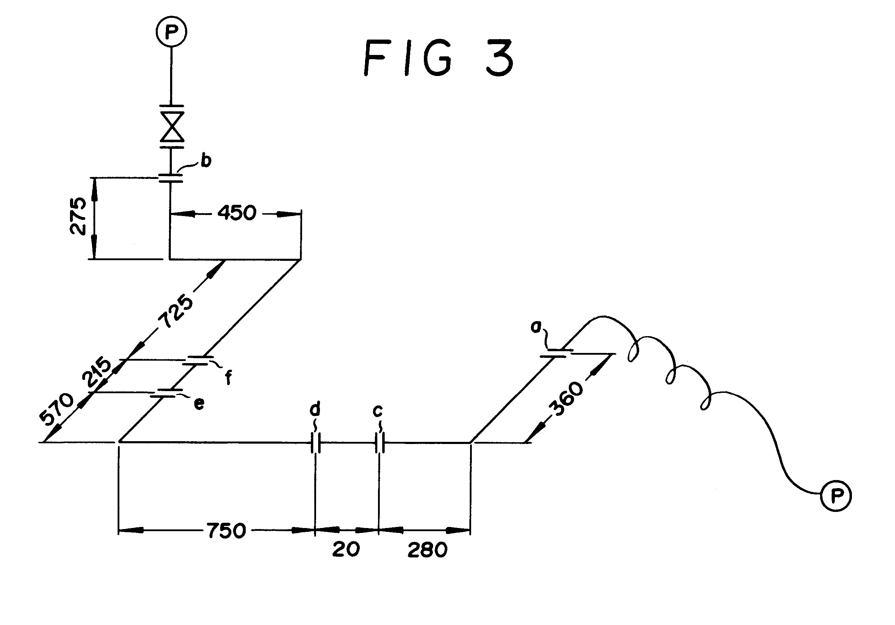

A plurality of lengths of the pipe produced in this experiment were laid as illustrated in Fig. 3 (with the connecting parts thereof formed each in the shape of a flange and clamped with a bolt and nut in the same manner as in Fig. 1). In the common interior of the pipes, a watery liquid (water in the present case) was passed under varying pressure conditions for 100 hours to determine the pipes' airtightness.

The results of the test for airtightness obtained are shown in Table 5.

Table 5 Airtightness test

| Water pressure ($kg/cm^2$) | Airtightness |
|---|---|
| 10 | good |
| 15 | good |
| 20 | good |
| 25 | good |
| 30 | good |
| 35 | good |
| 40 | good |

## Claims

1. A pipe for use with watery liquid or gas, which comprises being formed of a copolymer produced by cross-linking an α-olefin and a vinyl monomer having a carboxylic acid ester group by exposure to radiation.

2. A pipe according to claim 1, wherein said α-olefin in said copolymer is an α-olefin having 2 to 5 carbon atoms.

3. A pipe according to claim 1, wherein said vinyl monomer having a carboxylic acid ester group and contained in said copolymer is an alkyl acrylate containing an alkyl group of 1 to 5 carbon atoms.

4. A pipe according to claim 1, wherein said copolymer incorporates therein 0.01 to 3.0 mol% of a pollution-free stabilizer.

5. A pipe according to claim 3, wherein the content of said monomer having a carboxylic acid ester group is in the range of 2 to 40 mol%.

6. A pipe according to claim 3, wherein said monomer having a carboxylic acid ester group is an alkyl acrylate of 2 to 4 carbon atoms.

7. A pipe according to claim 4, wherein said pollution-free stabilizer is at least one member selected from the group consisting of pentaerythrityl-tetrakis[3,(3,5-ditertiary butyl-4-hydroxyphenyl)propionate], 2,2'-thiodiethyl-bis-[3-(3,5-ditertiary butyl-4- hydroxyphenyl)propionate], octadecyl-3-(3,5-ditertiary butyl-4-hydroxyphenyl)propionate, dilauryl thiodipropionate, and distearyl thio-propionate.

FIG 1

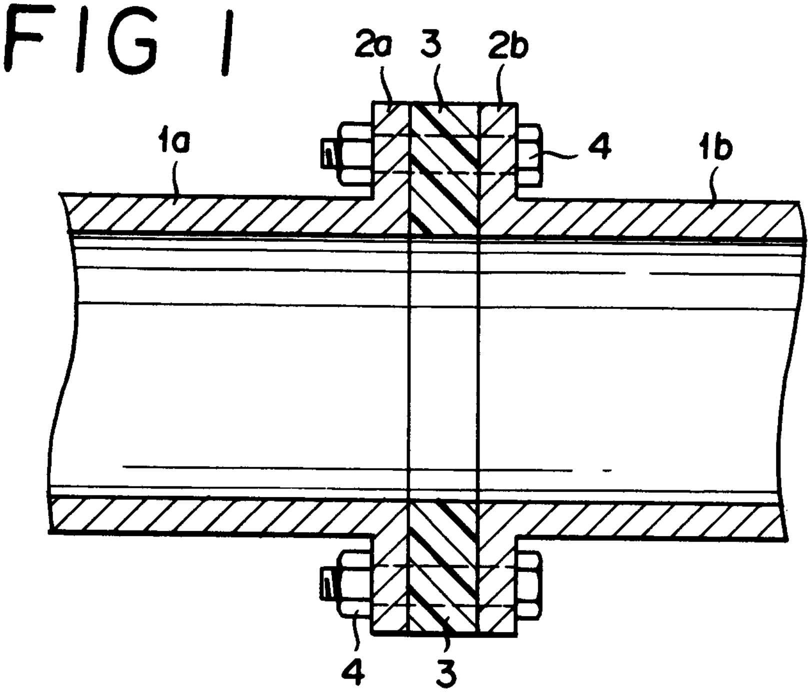


FIG 2

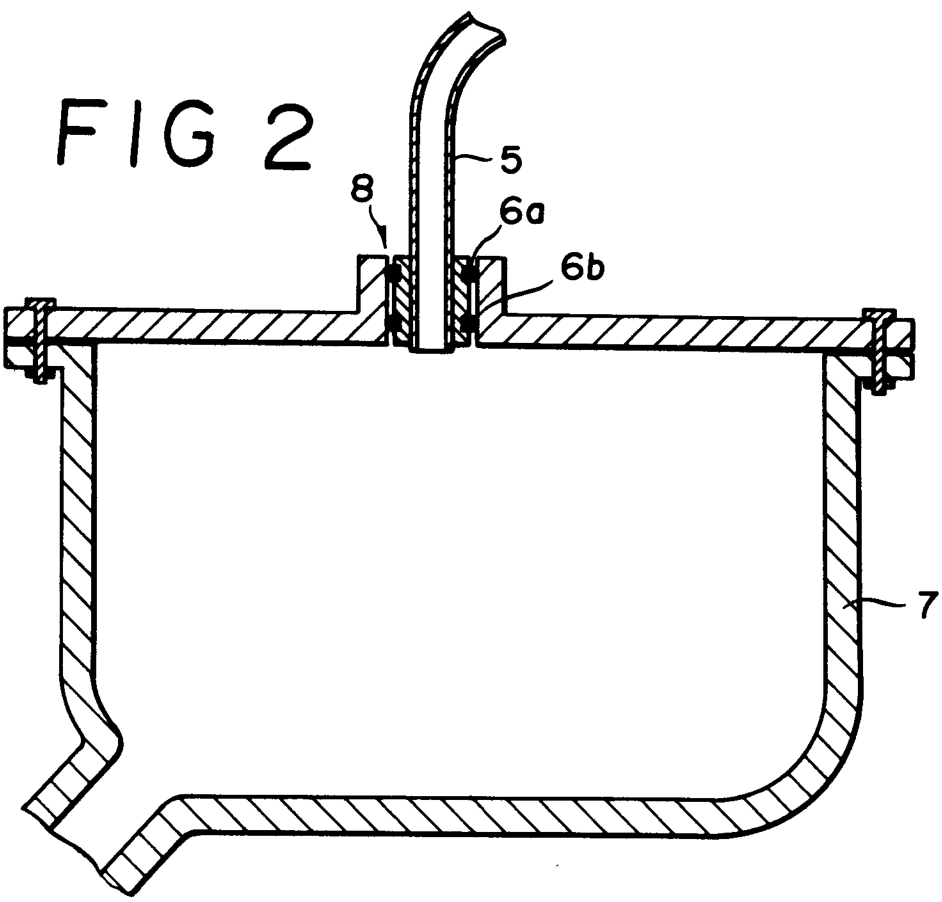

FIG 3